Europäisches Patentamt

(19) European Patent Office

Office européen des brevets

(11) **EP 0 904 925 A1**

(12) **EUROPEAN PATENT APPLICATION**
published in accordance with Art. 158(3) EPC

(43) Date of publication:
**31.03.1999 Bulletin 1999/13**

(51) Int. Cl.[6]: **B29C 49/22**

(86) International application number:
**PCT/JP97/01280**

(21) Application number: **97916652.7**

(22) Date of filing: **14.04.1997**

(87) International publication number:
**WO 97/38845 (23.10.1997 Gazette 1997/45)**

(84) Designated Contracting States:
**BE DE ES FR GB IT SE**

(30) Priority: **18.04.1996 JP 97182/96**

(71) Applicants:
• **NIPPON STEEL CHEMICAL CO., LTD.
Chuo-ku, Tokyo 104 (JP)**

• **NIPPON STEEL CORPORATION
Tokyo 100-71 (JP)**

(72) Inventor: **ANDOH, Hideki
Kisarazu-shi, Chiba 292 (JP)**

(74) Representative: **Whalley, Kevin
MARKS & CLERK,
57-60 Lincoln's Inn Fields
London WC2A 3LS (GB)**

(54) **MULTI-LAYERED BLOW MOLDED BODY AND MULTI-LAYERED BLOW MOLDING METHOD**

(57)     A multilayer blow-molded article comprising at least two or more layers, characterized in that the molded article is composed of materials satisfying a condition of To<Ti, in which To (°C) is a DTUL (deflection temperature under load) of a resin constituting an outermost layer and Ti (°C) is a DTUL of a resin which is a principal constitutional component of an inner layer and that an external surface of the molded article satisfies a surface characteristic of a surface roughness of 0.2 μm or less defined by a center line average roughness (Ra) or a 60 degree specular glossiness of 60 % or more, and a blow-molding method of a multilayer blow-molded article comprising at least two or more layers, wherein blow-molding is carried out with selecting resins and a mold temperature satisfying a condition of To<Tm<Ti, in which To (°C) is a DTUL of a resin constituting an outermost layer, Ti (°C) is a DTUL of a resin which is a principal constitutional component of an inner layer and Tm (°C) is a mold temperature. Provided is a mold article which has surface smoothness and gloss resulted from good transfer of a mold cavity surface without allowing the production cost to rise.

## Description

Technical Field

The present invention relates to a multilayer blow molded article and a molding method for the same, specifically to a multilayer blow molded article having excellent surface smoothness and gloss and a molding method for the same.

Background Art

Attention is paid to a blow-molding method as a molding method to manufacture products having a circular sectional form such as containers through, for example, plate-shaped products having a double wall and having a non-circular sectional form in recent years. It is investigated to apply that method to, for example, housings of household electric appliances and OA devices and external plate parts of automobiles. However, such method has had the defect that it is hard to apply that method to uses in which good appearance is required because blow-molded articles have low surface smoothness as compared with that of injection-molded articles.

In general, in a blow molding method, a parison (cylindrical molten resin) is extruded or injected into an opened mold, and the mold is closed, followed by blowing air of 5 to 10 kgf/cm$^2$ to carry out molding. Even if a cavity surface of the mold is processed to a specular surface, the good surface smoothness can not be obtained because of the low air pressure. Accordingly, finish processing such as mechanical polishing has so far been carried out after molding. However, there have been problems such that the finish processing leads to an increase in the production steps, so that the productivity is lowed and in turn the production cost increases.

Proposed as methods for solving such problems are (1) a method in which a mold is heated to high temperatures (Japanese Patent Application Laid-Open No. Hei 2-127023, Japanese Patent Application Laid-Open No. Hei 2-88216 and Japanese Patent Application Laid-Open No. Hei 4-77231), (2) a method in which the surface of a parison is heated (Japanese Patent Application Laid-Open No. Sho 62-77919, Japanese Patent Application Laid-Open No. Sho 63-218332 and Japanese Patent Application Laid-Open No. Hei 5-269828), (3) a method in which a part having a good surface smoothness which has been molded in advance by injection molding is inserted into a mold and then blow molding is carried out (Japanese Patent Application Laid-Open No. Sho 63-9526 and Japanese Patent Application Laid-Open No. Hei 2-179721), and (4) a method in which a parison is drawn from holes on a surface of a mold by vacuum to improve a surface transfer property (Japanese Patent Application Laid-Open No. Hei 3-272826).

However, method (2) has a risk to accelerate draw-down of the parison, and method (3) brings about an extension of the molding cycle and therefore is not preferred in terms of productivity. Method (4) has a defect that an effect of smoothening the surface is low. The largest effect can be expected from method (1) in which a mold is heated to high temperatures. However, elevating the mold temperature results in prolonging time required for cooling and solidifying the plasticized resin and therefore extending as well the molding cycle to reduce the efficiency. Expected is a method in which a heating medium and a cooling medium are put alternately into a mold to repeat heating and cooling, but the heat efficiency is inferior and the molding cycle itself is not shortened so much.

Accordingly, proposed is a method in which a thin wall structure is employed for a mold to lower a heat capacity in order to accelerate a response speed of cooling (Mold Technology, vol. 9, No. 13, pp. 23 ~ 34, 1994). However, molded articles to which the above method can be applied have their structures limited, and therefore such method is not generally applicable. Further, proposed as well are methods in which only the surface of a mold is quickly heated by high-frequency induction heating (Japanese Patent Publication No. Sho 58-40504 and Japanese Patent Publication No. Sho 57-4748). However, a high-frequency induction heating apparatus is very expensive, and therefore these methods are not generally applicable as well.

On the other hand, it is proposed as well to prevent a resin from quickly cooling and solidifying by providing the layer of a substance having low heat-conductivity on the surface of a mold to obtain a molded article having good surface smoothness. Selected as substances having low heat-conductivity are, for example, fluoresins and epoxy resins in Japanese Patent Application Laid-Open No. Sho 54-142266, various metal oxides and ceramics in Japanese Patent Application Laid-Open No. Hei 4-211912, and epoxy resins and polyimide resins in Japanese Patent Application Laid-Open No. Hei 5-111937, Japanese Patent Application Laid-Open No. Hei 5-169456 and Japanese Patent Application Laid-Open No. Hei 6-91736. However, there have been problems such that since only covering the surface of a mold with a material having a low heat conductivity takes time to cool a molded article and extends a molding cycle as is the case with elevating a mold temperature, an increase in the production cost occurs.

In general, in order to improve surface smoothness of a blow-molded article and take out the molded article from a mold without deforming it, there have to be satisfied two conditions that (1) a temperature of a mold is higher than at least a DTUL (deflection temperature under load: based on ASTM-D648, a load of 1.82 N/mm$^2$) of the surface of a material at the time of contacting a parison and (2) a temperature of the mold is lower than at least the DTUL of the material at the time of taking out the molded article from the mold. If a temperature of the mold is kept constant, these two conditions can not be satisfied, and therefore heating and cooling are usually switched over during a molding step to allow the temperature of the mold to go up and down. As described above, however, a heating and cooling cycle is prolonged because of a large heat capacity of a mold, which leads to an increase in the production cost. Further, there have been problems such that methods of shortening a heating and cooling cycle by reducing a wall thickness of a mold bring about an increase in costs of molds and facilities and therefore the foregoing methods do not become essential solving methods.

Disclosure of the Invention

An object of the present invention is to solve such conventional problems and to provide a method of easily producing a blow-molded article having excellent surface smoothness without raising a production cost and a blow-molded article obtained thereby having an excellent surface characteristic.

Intensive researches repeated by the present inventors in order to solve the problems described above have resulted in finding that in a multilayer blow-molding method, surface smoothness can be improved without extending a molding cycle time by making a DTUL (deflection temperature under load) of a material constituting an outermost layer lower than a DTUL of a material constituting an inner layer and setting mold surface temperatures at the time of contacting a parison and at the time of taking out a molded article to certain fixed ranges in relation to the DTUL values of the two materials described above, and thus coming to complete the present invention.

That is, the present invention is characterized by:

(1) a multilayer blow-molded article comprising at least two or more layers, characterized in that the molded article is composed of materials satisfying a condition of $To<Ti$, in which $To$ (°C) is a DTUL of a resin constituting an outermost layer and $Ti$ (°C) is a DTUL of a resin which is a principal constitutional component of an inner layer and that an external surface of the molded article satisfies at least one surface characteristic of a surface roughness of 0.2 $\mu$m or less, which is defined by a center line average roughness (Ra) based on JIS-B0601, or a 60 degree specular glossiness of 60 % or more based on JIS-K7105; in the blow-molded article of the present invention described above, the principal constitutional component of the inner layer and the component of the outermost layer are preferably composed of resins in which a difference ($Ti - To$) between the DTULs thereof is 10°C or more,

(2) a molding method of a blow-molded article comprising at least two or more layers, wherein blow molding is carried out with selecting resins and a mold temperature satisfying a condition of $To<Tm<Ti$, in which $To$ (°C) is a DTUL of a resin constituting an outermost layer, $Ti$ (°C) is a DTUL of a resin which is a principal constitutional component of an inner layer and $Tm$ (°C) is a mold temperature, and

(3) a molding method of a blow-molded article comprising at least two or more layers, wherein blow molding is carried out with selecting resins and mold temperatures satisfying conditions of $To<Ti$, $To<Tm_1$ and $Tm_2<Ti$ at the same time, in which $To$ (°C) is a DTUL of a resin constituting an outermost layer, $Ti$ (°C) is a DTUL of a resin which is a principal constitutional component of an inner layer, $Tm_1$ (°C) is a mold temperature at the time of contacting a parison and $Tm_2$ (°C) is a mold temperature at the time of taking out the molded article.

In the blow-molding method of the present invention described above, it is preferable to mold by using a mold covered a cavity surface thereof with a material having a low heat conductivity. Further, in the blow-molding method of the present invention described above, a temperature difference between a mold temperature at the time of contacting a parison and a DTUL of the outermost layer resin is maintained preferably at 10°C or higher, and a temperature difference between a DTUL of the resin which is a principal constitutional component of the inner layer and a mold temperature at the time of taking out the molded article is maintained preferably at 10°C or higher, respectively.

The present invention shall be explained below in further detail.

The DTUL (deflection temperature under load) specified in the present invention is an index for a heat resistance of plastics and prescribed in ASTM D-648. To be specific, a test piece having a length of 127 mm, a width of 12.7 mm and a thickness of 6.4 mm is put on supporting bases in which a distance between the supporting points is 100 mm, and a bending stress of 18.5 kgf/cm$^2$ is applied to the center of the test piece. Then, a temperature is elevated at a rate of 2°C/minute, and the DTUL is defined by a temperature observed when a deflection of the test piece caused by the load reaches 0.254 mm.

The resin that can be used in the present invention shall by no means be restricted as long as the DTUL thereof satisfies the condition (1) described above. However, considering prevention of stratiform peeling (delamination) and problems of scrap return and recycle, combinations shown, for example, in Table 1 are suitably used. In particular, resins in which a value of a difference $\Delta T = Ti - To$ between the DTULs of an outer layer resin and an inner layer resin is 10°C or more, preferably 20°C or more are preferably combined.

Table 1

| No. | Outer layer resin | Inner layer resin |
|---|---|---|
| 1 | Thermoplastic resin | Resin obtained by adding filler to resin given in left column |
| 2 | LDPE | HDPE or PP |
| 3 | LLDPE | HDPE or PP |
| 4 | EPR or EPDM | HDPE or PP |
| 5 | SBS or SEBS | GPPS, HIPS or ABS |
| 6 | GPPS or HIPS | ABS |
| 7 | ABS | Heat-resistant ABS |
| 8 | ABS | PC |
| 9 | ABS | PC/ABS alloy |
| 10 | PET | PC |

A constitutional ratio in thickness of the outer layer resin to the inner layer resin in the present invention shall not specifically be restricted. Usually, it is selected preferably in a range of outer layer thickness/inner layer thickness = 1/20 to 1/1 in light of the facts that the thinner the outer layer is, the more the molding cycle can be shortened and that the thicker the outer layer is, the more easily the surface smoothness is provided. In a range of outer layer thickness/inner layer thickness<1/20, the transfer property is liable to become insufficient because of too large influence exerted by an inner layer material having a high DTUL. On the other hand, in a range of outer layer thickness/inner layer thickness>1/1, it takes time to cool down because of a large constitutional ratio of an outer layer material having a low DTUL, and therefore the molding cycle is prolonged.

An external surface characteristic of the multilayer blow-molded article in the present invention is judged by measuring a surface roughness defined by a center line average roughness (Ra) based on JIS-B0601 or a 60 degree specular glossiness based on JIS-K7105.

In the present invention, either a surface roughness of 0.2 $\mu$m or less or a specular glossiness of 60 % or more is satisfied, and this allows the blow-molded article of the present invention to be used as a molded article which is markedly excellent in surface smoothness and glossiness.

Can be used for the mold used in the present invention are materials usually used for molding thermoplastic resins, such as iron or steel comprising iron as a main component, aluminum or alloy comprising aluminum as a main component and zinc alloys. Further, in order to prevent a molten resin from being quickly cooled down and improve a transfer property on a mold surface, the mold described above may be covered a surface thereof with materials having a low heat conductivity. Various silicate compounds including glass, ceramics, thermosetting resins represented by epoxy resins, fluororesins and polyimide resins are suitably used as the materials having a low heat conductivity used for the purpose described above.

Among them, aromatic polyimide resins soluble in organic solvents are suitably used from a viewpoint of durability and ease of processing. With respect to such soluble polyimide resins, their chemical structures shall by no means be restricted as long as they can be dissolved in solvents such as m-cresol, tetrachloroethane, N-methyl-2-pyrrolidone and N,N-dimethylacetamide at a concentration of 10 to 30 % by weight, but they have to have a higher glass transition temperature than a molding temperature (melting temperature) of a thermoplastic resin to be molded.

The polyimide resins having such structures include resins into which a bending structure is introduced by using as aromatic diamines, 3,3'-diaminodiphenyl ether, 3,3'-diaminodiphenylmethane, 3,3'-diaminobenzophenone, 9,9'-bis(3-methyl-4-aminophenyl)fluorene, 9,9'-bis(3-ethyl-4-aminophenyl)fluorene and 9,9'-bis(4-aminophenyl)fluorene, and resins into which bulky substituents are introduced by using as tetracarboxylic acid dianhydrides, 2,2-bis(3,4-biscarboxyphenyl)-1,1,1,3,3,3-hexafluoropropane dianhydride and various phenyl group-substituted acid anhydrides.

Further, another materials can be laminated for the purpose of further improving durability and surface smoothness of a substance having low heat conductivity as long as they do not damage an insulation effect of the substance having low heat conductivity. They are included in the present invention. Included are, for example, coating of various hard coating materials such as silicones, epoxy acrylates and urethane acrylates, various metal plating processings, and vacuum evaporation and flame spraying of metals, metal oxides and ceramics.

As described above, in order to improve surface smoothness of a blow-molded article and take out the molded article from a mold without deforming, two conditions have to be satisfied: (1) a temperature of the mold is higher than at least a DTUL of a material (outer layer) at the time of contacting a parison (improvement in a transfer property on a mold surface); (2) a temperature of the mold is lower than at least a DTUL of a material (inner layer) at the time of taking out the molded article from the mold (shortening of molding cycle time).

In the present invention, a blow molding method satisfying the two conditions described above without increasing molding cycle time has been enabled by making use of the effect that in a multilayer blow-molding method using plural resins each of which has a different DTUL value, an outer layer resin having a low DTUL value contributes to improvement in a transfer property on a mold surface and an inner layer resin having a high DTUL value contributes to shortening of molding cycle time.

The principal object is to provide a blow-molded article having good surface smoothness and gloss without allowing a production cost to rise, and multilayer blow-molding is essentially presupposed in the present invention. Accordingly, the blow-molding method of the present invention can not be applied to single layer blow-molding, but any specific apparatuses and facilities are not required.

Best Mode for Carrying out the Invention

Qualitatively summarized as shown in Table 2 is a comparison of conventional single layer blow-molding with multilayer blow-molding of the present invention in terms of the relationship between the DTULs of the resin materials used in the present invention and the mold temperatures.

Table 2

| Comparison of conventional blow-molding with multilayer blow-molding of the present invention | | | |
|---|---|---|---|
| | Temperature condition | Mold transfer property | Molding cycle |
| Conventional technique | | | |
| Only cooling | $Tm<T$ | X | ◎ |
| Change-over of heating and cooling | $Tm_2<T<Tm_1$ | ○ | X |
| Insulated mold | $Tm<T$ | ○ | △ |
| Present invention | | | |
| Only cooling | $To<Tm<Ti$ | △ | ○ |
| Change-over of heating and cooling | $To<Ti$ $To<Tm_1$, $Tm_2<Ti$ | ○ | ○ |
| Insulated mold | $To<Tm<Ti$ | ○ | ○ |

Definitions of symbols:

T : DTUL (°C) of material in single layer blow-molding
To : DTUL (°C) of outer layer material in multilayer blow-molding
Ti : DTUL (°C) of inner layer material in multilayer blow-molding
Tm : Mold temperature (°C) in molding at a fixed mold temperature
$Tm_1$: Mold temperature (°C) at the time of the starting of blowing in molding by change-over to cooling
$Tm_2$: Mold temperature (°C) at the time of taking out a product in molding by change-over to cooling

The temperature conditions shall by no means be restricted as long as the relations described above are satisfied, and a temperature difference between the mold temperature at the time of contacting a parison and the DTUL of the outermost layer resin is preferably 10°C or higher, more preferably 15°C or higher. Further, a temperature difference between the DTUL of the resin which is a principal constitutional component of the inner layer and the mold temperature at the time of taking out the product is maintained as well preferably at 10°C or higher.

That is, if a difference Tm - To (or $Tm_1$ - To) is lower than 10°C, the transfer property on the mold surface is not sufficiently good, and therefore such value is not preferred. Further, if a difference Ti - Tm (or Ti - $Tm_2$) is lower than

10°C, the product has a low cooling efficiency to allow the molding cycle time to become longer, and therefore such value is not preferred either. Accordingly, when only cooling is carried out or an insulated mold is used, a value of a difference $\Delta T = Ti - To$ between the DTUL of the outer layer resin and that of the inner layer resin is 10°C or higher, preferably 20°C or higher and more preferably 30°C or higher.

In particular, when heating and cooling are changed over (change over to cooling), a difference $\Delta T' = Tm_1 - Tm_2$ between a mold temperature at the time of the starting of blowing and that at the time of taking out a product becomes 40°C if a difference between a mold temperature and a DTUL of a resin is set at 20°C (that is, $T - Tm_2 = Tm_1 - T = 20°C$) in a conventional method. In the present invention, however, if resins of $Ti - To = 20°C$ are selected and molding is carried out under the same condition ($Tm_1 - To = Ti - Tm_2 = 20°C$), molding becomes possible at $\Delta T' = Tm_1 - Tm_2 = 40 - (Ti - To) = 20°C$. That is, in the present invention, the larger the difference (Ti - To) becomes, the more the difference between a mold temperature at the time of heating and that at the time of cooling can be reduced, and the molding cycle time can be shortened that much.

EXAMPLES

The present invention shall specifically be explained below with reference to examples.

Multilayer blow-molding conditions in the respective examples are as follows:

- Molding machine: multilayer blow-molding machine NB120S (three kinds, three layers) manufactured by THE JAPAN STEEL WORKS, LTD.
  clamping force: 120 tonf
- Extruding machine (screw major diameter): internal layer 90 mm$\varnothing$, intermediate layer 50 mm$\varnothing$ and external layer 65 mm$\varnothing$
- Mold cavity: 700 × 450 × 20 mm plate
- Cavity surface: specular finish<Ra 0.1 $\mu$m
- Convnetional mold: steel (heat conductivity: 50.0 W/m · K)
- Insulated mold: coated with soluble polyimide (CRI-100 manufactured by NIPPON STEEL CORPORATION) layer thickness 200 $\mu$m (heat conductivity: 0.23 W/m · k)
- Blowing pressure: 0.6 MPa (megapascal)
- Molding time: blowing + cooling + discharging time (time from closing mold to opening mold): 100 to 120 seconds

Example 1

Used were ABS-Estylene ABS500 (DTUL 85°C) manufactured by Nippon Steel Chemical Co., Ltd. as an outer layer material and ABS-Estylene ABS360 (DTUL 105°C) manufactured by Nippon Steel Chemical Co., Ltd. as an inner layer material to carry out multilayer blow-molding at a mold temperature of 95 °C by means of a conventional mold. Measuring results of the mold temperatures, the molding cycle (second) and the characteristic values on a surface of the molded article are shown in Table 3.

Example 2

Used were ABS-Estylene ABS500 (DTUL 85°C) manufactured by Nippon Steel Chemical Co., Ltd. as an outer layer material and ABS-Estylene ABS360 (DTUL 105°C) manufactured by Nippon Steel Chemical Co., Ltd. as an inner layer material to carry out a change-over of heating and cooling at a mold temperature of 105°C at the time of blowing air and at a mold temperature of 95 °C at the time of taking out the product by means of a conventional mold, whereby multilayer blow-molding was carried out. Measuring results of the mold temperatures, the molding cycle (second) and the characteristic values on a surface of the molded article are shown in Table 3.

Example 3

Used were ABS-Estylene ABS500 (DTUL 85°C) manufactured by Nippon Steel Chemical Co., Ltd. as an outer layer material and ABS-Estylene ABS360 (DTUL 105°C) manufactured by Nippon Steel Chemical Co., Ltd. as an inner layer material to carry out multilayer blow-molding at a mold temperature of 95 °C by means of an insulated mold. Measuring results of the mold temperatures, the molding cycle (second) and the characteristic values on a surface of the molded article are shown in Table 3.

Example 4

Used were ABS-Estylene ABS500 (DTUL 85°C) manufactured by Nippon Steel Chemical Co., Ltd. as an outer layer material and ABS-Estylene ABS380 (DTUL 115°C) manufactured by Nippon Steel Chemical Co., Ltd. as an inner layer material to carry out multilayer blow-molding at a mold temperature of 105 °C by means of a conventional mold. Measuring results of the mold temperatures, the molding cycle (second) and the characteristic values on a surface of the molded article are shown in Table 3.

Example 5

Used were ABS-Estylene ABS500 (DTUL 85°C) manufactured by Nippon Steel Chemical Co., Ltd. as an outer layer material and ABS-Estylene ABS380 (DTUL 115°C) manufactured by Nippon Steel Chemical Co., Ltd. as an inner layer material to carry out a change-over of heating and cooling at a mold temperature of 115°C at the time of blowing air and at a mold temperature of 95 °C at the time of taking out the product by means of a conventional mold, whereby multilayer blow-molding was carried out. Measuring results of the mold temperatures, the molding cycle (second) and the characteristic values on a surface of the molded article are shown in Table 3.

Example 6

Used were ABS-Estylene ABS500 (DTUL 85°C) manufactured by Nippon Steel Chemical Co., Ltd. as an outer layer material and ABS-Estylene ABS380 (DTUL 115°C) manufactured by Nippon Steel Chemical Co., Ltd. as an inner layer material to carry out multilayer blow-molding at a mold temperature of 95 °C by means of an insulated mold. Measuring results of the mold temperatures, the molding cycle (second) and the characteristic values on a surface of the molded article are shown in Table 3.

Comparative Example 1

ABS-Estylene ABS350 (DTUL 95°C) manufactured by Nippon Steel Chemical Co., Ltd. was used as a material to carry out single layer blow-molding at a mold temperature of 30 °C by means of a conventional mold. Measuring results of the mold temperature, the molding cycle (second) and the characteristic values on a surface of the molded article are shown in Table 3.

Comparative Example 2

ABS-Estylene ABS350 (DTUL 95°C) manufactured by Nippon Steel Chemical Co., Ltd. was used as a material to carry out a change-over of heating and cooling at a mold temperature of 115°C at the time of blowing air and at a mold temperature of 75 °C at the time of taking out the product by means of a conventional mold, whereby single layer blow-molding was carried out. Measuring results of the mold temperatures, the molding cycle (second) and the characteristic values on a surface of the molded article are shown in Table 3.

Comparative Example 3

ABS-Estylene ABS350 (DTUL 95°C) manufactured by Nippon Steel Chemical Co., Ltd. was used as a material to carry out single layer blow-molding at a mold temperature of 95 °C by means of an insulated mold. Measuring results of the mold temperature, the molding cycle (second) and the characteristic values on a surface of the molded article are shown in Table 3.

Table 3

| Example | Kind of mold | Mold temperature (°C) | | DTUL (°C) of resins used | | Molded article surface | | Molding cycle (second) |
|---|---|---|---|---|---|---|---|---|
| | | Blow start | Taking out product | Outer layer resin | Inner layer resin | Ra (μm) | Gloss-iness | |
| 1 | Conventional mold | 95 | 95 | 85 | 105 | 0.18 | 69.4 | 120 |
| 2 | Conventional mold | 105 | 95 | 85 | 105 | 0.12 | 90.2 | 120 |
| 3 | Insulated mold | 95 | 95 | 85 | 105 | <0.10 | 95.6 | 120 |
| 4 | Conventional mold | 105 | 105 | 85 | 115 | 0.15 | 78.3 | 120 |
| 5 | Conventional mold | 115 | 95 | 85 | 115 | <0.10 | 94.5 | 100 |
| 6 | Insulated mold | 95 | 95 | 85 | 115 | <0.10 | 96.0 | 100 |
| Comparative Example | Kind of mold | Mold temperature (°C) | | DTUL (°C) of resin used | | Molded article surface | | Molding cycle (second) |
| | | Blow start | Taking out product | | | Ra (μm) | Gloss-iness | |
| 1 | Conventional mold | 30 | 30 | 95 | | 0.25 | 28.6 | 90 |
| 2 | Conventional mold | 115 | 75 | 95 | | 0.12 | 90.1 | 180 |
| 3 | Insulated mold | 95 | 95 | 95 | | 0.11 | 91.0 | 150 |

DTUL: based on ASTM D-648,   Surface roughness (Ra): based on JIS B0601

Glossiness: based on JIS K7105 60 degree specular glossiness

EP 0 904 925 A1

Industrial Applicability

In multilayer blow-molding using plural resins each of which has a different DTUL value, a difference between a mold temperature at the time of starting blowing and that at the time of taking out a product can be reduced more than ever by combining an outer layer resin having a low DTUL value with an inner layer resin having a high DTUL value. Accordingly, the molding cycle time can be shortened. A surface appearance of the molded articles can notably be improved without damaging the productivity by applying the present invention to a molding method for various thermoplastic resins. For example, an after-treating step such as sanding which has been carried out in the field of blow-molding can be omitted. Accordingly, the present invention is expected to be applied to broad fields such as automobiles, household electric appliances, OA devices and the like.

**Claims**

1.  A multilayer blow-molded article comprising at least two or more layers, characterized in that the molded article is composed of materials satisfying a condition of To<Ti, in which To (°C) is a DTUL (deflection temperature under load: based on ASTM-D648, a load of 1.82 N/mm$^2$) of a resin constituting an outermost layer and Ti (°C) is a DTUL of a resin which is a principal constitutional component of an inner layer and that an external surface of the molded article satisfies at least one surface characteristic of either a surface roughness of 0.2 μm or less defined by a center line average roughness (Ra) based on JIS-B0601 or a 60 degree specular glossiness of 60 % or more based on JIS-K7105.

2.  The multilayer blow-molded article as described in claim 1, wherein the principal constitutional component of the inner layer and the component of the outermost layer are composed of resins in which a difference (Ti - To) between the DTULs thereof is 10°C or more.

3.  A multilayer blow-molding method of a multilayer blow-molded article comprising at least two or more layers, wherein blow-molding is carried out with selecting resins and a mold temperature satisfying a condition of To<Tm<Ti, in which To (°C) is a DTUL of a resin constituting an outermost layer, Ti (°C) is a DTUL of a resin which is a principal constitutional component of an inner layer and Tm (°C) is a mold temperature.

4.  A multilayer blow-molding method of a multilayer blow-molded article comprising at least two or more layers, wherein blow-molding is carried out with selecting resins and mold temperatures satisfying conditions of To<Ti, To<$Tm_1$ and $Tm_2$<Ti at the same time, in which To (°C) is a DTUL of a resin constituting an outermost layer, Ti (°C) is a DTUL of a resin which is a principal constitutional component of an inner layer, $Tm_1$ (°C) is a mold temperature at the time of contacting a parison and $Tm_2$(°C) is a mold temperature at the time of taking out the molded article.

5.  The multilayer blow-molding method as described in claim 3 or 4, wherein molding is carried out by using a mold covered a cavity surface thereof with a material having a low heat conductivity.

6.  The multilayer blow-molding method as described in claim 3 or 4, wherein a temperature difference between a mold temperature at the time of contacting a parison and a DTUL of the outermost layer resin is maintained at 10°C or higher, and a temperature difference between a DTUL of the resin which is a principal constitutional component of the inner layer and a mold temperature at the time of taking out the molded article is maintained at 10°C or higher, respectively.

| INTERNATIONAL SEARCH REPORT | International application No. |
|---|---|
| | PCT/JP97/01280 |

A. CLASSIFICATION OF SUBJECT MATTER

Int. Cl$^6$  B29C49/22

According to International Patent Classification (IPC) or to both national classification and IPC

B. FIELDS SEARCHED

Minimum documentation searched (classification system followed by classification symbols)

Int. Cl$^6$  B29C49/22-26, B29C49/48, B29C49/78-80

Documentation searched other than minimum documentation to the extent that such documents are included in the fields searched

Jitsuyo Shinan Koho          1926 - 1997
Kokai Jitsuyo Shinan Koho    1971 - 1997
Toroku Jitsuyo Shinan Koho   1994 - 1997

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 62-199425, A (Toyo Seikan Kaisha, Ltd.), September 3, 1987 (03. 09. 87) & US, 4818575, A & FR, 2595067, A1 & GB, 2188272, A1 | 1 - 6 |
| A | JP, 62-30021, A (Continental Pet Technologies, Inc.), February 9, 1987 (09. 02. 87) & US, 4665682, A & EP, 200564, A2 & DK, 202486, A & CN, 86103073, A | 1 - 6 |
| A | JP, 4-63836, A (Shin-Etsu Polymer Co., Ltd.), February 28, 1992 (28. 02. 92)(Family: none) | 1 - 6 |
| A | JP, 5-31792, A (Dainippon Printing Co., Ltd.), February 9, 1993 (09. 02. 93)(Family: none) | 1 - 6 |

☐ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| June 9, 1997 (09. 06. 97) | June 17, 1997 (17. 06. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)